# EUROPEAN PATENT APPLICATION

(11) **EP 1 308 322 A2**
(43) Date of publication of application: **07.05.2003**
(21) Application number: 02024493.5
(22) Date of filing: 30.10.2002
(51) Int. Cl.: B60C 25/00, B60C 25/05, B60S 5/04

(54) **Improvement in a tyre inflation system in tyre-changing machines**

(30) Priority: 02.11.2001 IT MO20010031 U
(71) Applicant: SICAM S.r.l., 42015 Correggio (Reggio Emilia) (IT)
(72) Inventor: Magnani, Franco, 42015 Correggio RE (IT)
(74) Representative: Reniero, Cirillo Silvano

(57) **Abstract**

Improvement in a tyre inflating system installed in a tyre-changing machine (1) and in communication with a pressurised fluid source and a pressurised fluid delivery member (3), comprising at least one pressure limiting valve (4) arranged upstream of said pressurised fluid delivery member (3) in said inflating system, the said pressure limiting valve (4) being arranged to limit the delivery pressure at at least two different maximum pressure threshold levels which can be alternatively selected by a user.

## Description

The present invention relates to an improvement in a tyre inflation system on tyre-changing machines.

At present, inflation systems in tyre-changing machines for motor vehicles and the like are provided with an inflation pressure limiting device designed to limit compressed air pressure to a given maximum threshold value which is indicated by the manufacturer of the tyre. Thus, such threshold value depends on the type of the tyre to be inflated by means of a specific tyre changing machine. In other words, dedicated tyre-changing machines are manufactured which are arranged to deal with both automobile tyres and tyres designed to be used on so called "derived" motor vehicles, i.e. vehicles similar to a given motor vehicle but normally arranged to undergo working loads different from those provided for such given motor vehicle, or with heavy industrial vehicle tyres.

The drawback faced with dedicated tyre changing machines is that the operator when carrying out a tyre inflating operation following tyre mounting, might erroneously apply highpressure air, sometimes well above the maximum safety threshold levels specified by the tyre manufacturer, in some cases even exceeding limits provided for by binding standards, e.g. UNI standards. This drawback, which is caused sometimes under the urge of rapidly carrying out a tyre changing operation, can result in serious damages to the structure of both motor vehicle tyres and "derived" motor vehicle tyres.

Moreover, structural differences in motor vehicles tyres can be on the one hand minimal as far as dimensions and weight are concerned, but can be important in relation to structure and load carrying capacity. Such structural differences result in the need of providing different tyre inflation pressures.

The main object of the present invention is to eliminate the above described drawback experienced in connection with prior art systems by providing an improved tyre inflating system in tyre-changing machines, which makes it possible for an operator to act rapidity and in safety conditions and to avoid any damage for the tyres during inflation operations, independently of the use destination of the tyres to be inflated.

Another object of the present invention is to provide an improved tyre inflating system simple in structure, easy to operate and of low manufacturing cost.

These and other objects are attained by an improvement in a tyre inflating system installed in a tyre-changing machine and in communication with a pressurised fluid source and a pressurised fluid delivery member, characterized in that it comprises at least one pressure limiting valve arranged upstream of said pressurised fluid delivery member in said inflating system, the said pressure limiting valve arranged to limit the delivery pressure at least two different maximum pressure threshold levels which can be alternatively selected by a user.

Further features and advantages of the present invention will better appear from the following detailed description of a preferred but not exclusive embodiment of an improvement in a tyre inflating system for a tyre-changing machine, here illustrated by way of a non-limiting example in the accompanying drawings, in which:
Figure 1 is a perspective view of a conventional tyre-changing machine, provided with an improved tyre inflating system according to the present invention;
Figure 2 is a detailed view on an enlarged scale of a first embodiment of a pressure limiting valve according to the present invention, arranged to control the pressurised air delivery so as to keep it within two set higher and lower threshold values;
Figure 3 is a partial detailed view on an enlarged scale of a second embodiment of a pressure limiting valve according to the invention arranged to control pressurised air delivery so as to keep it at two alternatively settable values.

With reference to the Figures of the drawings, 1 generally indicates a tyre-changing machine provided with a tyre inflating system, shown in the drawings as a piping 2.

In the improved system according to the present invention, a pressure limiting valve 4 is provided between a source of pressurised fluid (air) and an air delivery member 3, e.g. a coupling cap for tyre valves. The pressurised air source can be a tank (not shown) provided on the tyre changing machine 1 or a compressed air plant to which piping 2 can be connected. The pressure limiting valve 4 is arranged to control the air supply pressure so as to keep it between at least two maximum pressure threshold levels which differ from one another and can be alternatively selected by a user.

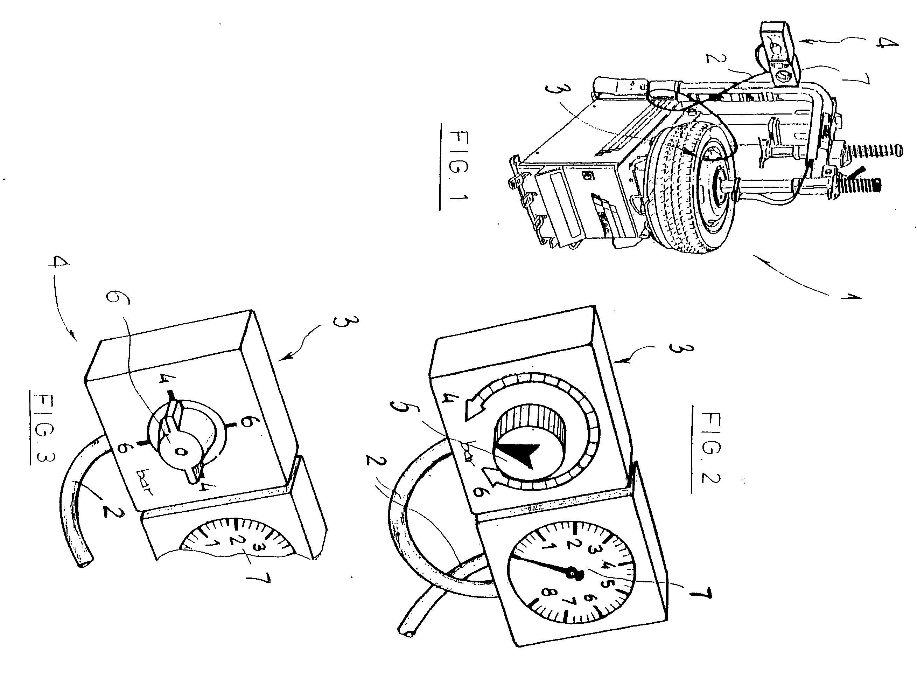

The pressure limiting valve 4 can be manufactured according to at least two embodiments. A first embodiment, illustrated in Figure 2, makes it possible to select predetermined maximum pressure values in a continuous way, i.e. by setting both the two maximum pressure threshold levels and any intermediate level between the lower and upper maximum levels.

A second embodiment of the pressure limiting valve 4 is illustrated in Figure 3. The maximum pressure threshold levels, although being predetermined as in the first embodiment, can be selected in a discontinuous way, i.e. either the lower or the higher maximum level can be selected, without going through intermediate values between the two maximum levels.

In a preferred embodiment of the present invention, the above-cited pressure threshold levels are respectively 4 bar for the lower maximum level and 6 bar for the upper maximum value.

These values enable tyre inflation of car tyres, while compressed air delivery is cut off at a set threshold of 4 bar, whereas for so called "derived" motor vehicles compressed air delivery is cut off at a threshold of 6 bar.

Advantageously, the pressure limiting valve 4 in the above described embodiments is provided with a knob 5 or 6 which can be handled the user for selecting a desired maximum pressure threshold level. Conveniently, valve 4 can functionally and synergistically co-operate with a pressure gauge 7 provided with a graduated scale.

The operation of an improved system according to the invention is plainly simple. Through pressure limiting valve 4, the user selects the maximum pressure threshold level for compressed air used for inflating a tyre 8, such a level depending upon the tyre type and the tyre manufacturer's instructions. Should the tyre be designed to be mounted on a motor vehicle, the operator selects the maximum level of 4 bar, whereas if the tyre is going to be mounted on a "derived" motor vehicle, the operator will select 6 bar as maximum level. The operator then proceeds with inflating the tyre in a conventional way, while being certain that the pressure limiting valve 4 will cut off compressed air delivery before the air pressure exceeds the selected maximum threshold level, which would damage the structure of tyre 8.

Accordingly, the invention as described above makes it possible to attain the previously set forth objects.

All details can be replaced by technically equivalent ones. In practice, the materials used, as well as the shapes and sizes of the components can vary according to requirements.

The invention is susceptible to modifications and variations, all of which fall within the scope of protection of the claims.

The disclosure of Italian patent application No. MO2001U000031 from which priority is claimed is incorporated herein by reference.

## Claims

1. Improvement in a tyre inflating system installed in a tyre-changing machine (1) and in communication with a pressurised fluid source and a pressurised fluid delivery member (3), **characterized in that** it comprises at least one pressure limiting valve (4) arranged upstream of said pressurised fluid delivery member (3) in said inflating system, the said pressure limiting valve (4) being arranged to limit the delivery pressure at at least two different maximum pressure threshold levels which can be alternatively selected by a user.

2. Improvement as claimed in claim 1, **characterised in that** the said two maximum pressure threshold levels are predetermined and selectable in a continuous way starting from one maximum level to the other.

3. Improvement as claimed in claim 1, **characterised in that** said two maximum pressure threshold levels are predetermined and selectable in a discontinuous way starting from one maximum level to the other.

4. Improvement as claimed in any preceding claim, **characterised in that** the said two maximum pressure threshold levels are predetermined, the lower maximum level ranging between 3.5 and 4.5 bar, and the higher maximum level ranging between 5.5 and 6.5 bar.

5. Improvement as claimed any preceding claim, **characterised in that** the said pressure limiting valve (4) has a selection control knob (5, 6) for selecting a lower maximum pressure threshold level and a higher maximum pressure threshold level.

6. Improvement as claimed in claim 5, **characterised in that** the said pressure limiting valve (4) is provided with a graduated scale pressure gauge (7).
